# EUROPÄISCHE PATENTSCHRIFT

(11) **EP 2 929 961 B1**
(45) Veröffentlichungstag und Bekanntmachung des Hinweises auf die Patenterteilung: **21.06.2017**
(21) Anmeldenummer: 15157089.2
(22) Anmeldetag: 02.03.2015
(51) Int. Cl.: B22F 3/105, B29C 67/00

(54) **Vorrichtung zum generativen Herstellen eines Bauteils**
Device for the generative production of a component
Dispositif de fabrication générative d'un composant

(30) Priorität: 11.04.2014 DE 102014206996
(43) Veröffentlichungstag der Anmeldung: 14.10.2015
(73) Patentinhaber: MTU Aero Engines AG, 80995 München (DE)
(72) Erfinder: Jakimov, Andreas, 81245 München (DE); Schlothauer, Steffen, 85253 Erdweg (DE); Schlick, Georg, 80809 München (DE)

(56) Entgegenhaltungen:
- EP-A1- 1 600 282
- DE-A1-102011 088 158
- DE-A1-102011 121 568

## Beschreibung

Die Erfindung betrifft eine Vorrichtung der im Oberbegriff des Patentanspruchs 1 angegebenen Art zum generativen Herstellen eines Bauteils. Die Erfindung betrifft weiterhin ein Verfahren zum Betreiben einer solchen Vorrichtung.

Bei herkömmliche Vorrichtungen zum generativen Herstellen von Bauteilen, beispielsweise bei selektiven Lasersinter-Anlagen, werden in einem Bauraum der Vorrichtung ein oder mehrere Bauteile schichtweise aus einem pulverförmige Werkstoff hergestellt. Hierzu wird eine schichtweise absenkbare Bauteilplattform mit dem pulverförmigen Werkstoff bzw. Werkstoffgemisch beschichtet, indem ein linear bewegliches Transportmittel den Werkstoff von einem als Pulverreservoir dienenden Vorratsbehälter zum Bauraum transportiert. Überschüssiges Pulver fällt in seitlich des Bauraums angeordnete Überlaufbehälter und kann aus diesen zurückgewonnen werden. Anschließend wird der Werkstoff entsprechend einer Schichtinformation des herzustellenden Bauteils lokal aufgeschmolzen und/oder versintert. Danach wird die Bauteilplattform um eine vordefinierte Schichtdicke abgesenkt und der Vorgang bis zur Fertigstellung des Bauteils wiederholt. Eine solche Vorrichtung ist beispielsweise bereits aus der DE 10 2011 088 158 A1 und der EP 1 600 282 A1 bekannt.

Als nachteilig an den bekannten Vorrichtungen ist der Umstand anzusehen, dass der Beschichtungsvorgang im Vergleich zum Schmelzen bzw. Sintern vergleichsweise lange dauert, wodurch der gesamten Herstellungsprozess des Bauteils stark verlangsamt und damit die Produktivität und Wirtschaftlichkeit der Vorrichtung verringert werden.

Aufgabe der vorliegenden Erfindung ist es, eine Vorrichtung der eingangs genannten Art zu schaffen, welche eine beschleunigte generative Herstellung von Bauteilen ermöglicht. Eine weitere Aufgabe der Erfindung ist es, ein entsprechendes Verfahren zum Betreiben einer solchen Vorrichtung anzugeben.

Die Aufgaben werden erfindungsgemäß durch eine Vorrichtung mit den Merkmalen des Patentanspruchs 1 zum generativen Herstellen eines Bauteils sowie durch ein Verfahren gemäß Patentanspruch 8 zum Betreiben einer solchen Vorrichtung gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Vorrichtung als vorteilhafte Ausgestaltungen des Verfahrens und umgekehrt anzusehen sind.

Ein erster Aspekt der Erfindung betrifft eine Vorrichtung zum generativen Herstellen eines Bauteils. Um eine beschleunigte generative Herstellung von Bauteilen zu ermöglichen, ist erfindungsgemäß ein weiterer Vorratsbehälter zur Aufnahme von pulverförmigem Werkstoff vorgesehen. Weiterhin ist vorgesehen, dass das Transportmittel der Vorrichtung vom Vorratsbehälter über den ersten Überlaufbehälter zum Bauraum und vom Bauraum über den zweiten Überlaufbehälter zum weiteren Vorratsbehälter sowie vom weiteren Vorratsbehälter über den zweiten Überlaufbehälter zum Bauraum und vom Bauraum über den ersten Überlaufbehälter zum Vorratsbehälter bewegbar ist. Hierdurch ist es erfindungsgemäß sichergestellt, dass das als Beschichter dienende Transportmittel im Unterschied zum Stand der Technik keinen unproduktiven Leerweg zurücklegen muss. Stattdessen kann der pulverförmige Werkstoff bzw. das pulverförmige Werkstoffgemisch entweder in einer Richtung vom Vorratsbehälter zum Bauraum oder in der umgekehrten Richtung vom weiteren Vorratsbehälter zum Bauraum transportiert werden. Somit muss das Transportmittel nicht den kompletten Verfahrweg zurück in die Ausgangsposition fahren, um eine neue Pulverschicht zur Herstellung einer weiteren Bauteilschicht bereitzustellen. Dies verkürzt die Beschichtungsvorgänge entsprechend um etwa 50%, so dass die Produktivität und Wirtschaftlichkeit der Vorrichtung um bis zu 50% oder mehr gesteigert werden kann. Weiterhin ist erfindungsgemäß vorgesehen, dass das Transportmittel, das erste Schließmittel und das zweite Schließmittel mit einem Steuermittel gekoppelt sind, wobei das Steuermittel ausgelegt ist, das erste Schließmittel in den Schließzustand und das zweite Schließmittel in den Offenzustand zu schalten, wenn das Transportmittel vom Vorratsbehälter über den ersten Überlaufbehälter zum Bauraum und vom Bauraum über den zweiten Überlaufbehälter zum weiteren Vorratsbehälter bewegt wird. Weiterhin ist das Steuermittel ausgelegt, das erste Schließmittel in den Offenzustand und das zweite Schließmittel in den Schließzustand zu schalten, wenn das Transportmittel vom weiteren Vorratsbehälter über den zweiten Überlaufbehälter zum Bauraum und vom Bauraum über den ersten Überlaufbehälter zum Vorratsbehälter bewegt wird. Mit anderen Worten wird in Abhängigkeit der Bewegungsrichtung des Transportmittels der dem betreffenden Vorratsbehälter nachfolgende Überlaufbehälter durch entsprechende Ansteuerung und/oder Regelung des zugeordneten Schließmittels verschlossen, während der andere Überlaufbehälter durch entsprechende Ansteuerung und/oder Regelung des zugeordneten Schließmittels geöffnet wird. Hierdurch ist vorteilhaft sichergestellt, dass das vom betreffenden Vorratsbehälter zum Bauraum transportiere Werkstoffpulver nicht unerwünschter Weise in den dem Bauraum vorgelagerten Überlaufbehälter, sondern erst in den dem Bauraum in Bewegungsrichtung des Transportmittels nachgelagerten Überlaufbehälter fällt. Dies ermöglicht eine besonders effiziente Nutzung des Werkstoffpulvers sowie eine weitere Beschleunigung des Beschichtungsvorgangs.

In einer vorteilhaften Ausgestaltung der Erfindung ist vorgesehen, dass das erste Schließmittel und/oder das zweite Schließmittel als Klappe ausgebildet ist, welche zwischen dem Schließzustand und dem Offenzustand bewegbar ist. Obwohl das erste und/oder zweite Schließmittel grundsätzlich nicht auf eine bestimmte Ausführungsform beschränkt und beispielsweise auch als Ventil oder dergleichen ausgebildet sein kann, bietet die Ausgestaltung als Klappe den Vorteil, dass das betreffende Schließmittel konstruktiv besonders einfach, robust und kostengünstig ausgeführt werden kann. Weiterhin können auch Überlaufbehälter mit großflächigen Öffnungen mit Hilfe einer beweglichen Klappe wahlweise verschlossen oder freigegeben werden. Grundsätzlich können dabei natürlich auch mehrere Klappen bzw. eine segmentierte Klappe vorgesehen sein.

Weitere Vorteile ergeben sich, wenn das erste Schließmittel als Klappe ausgebildet ist, die im Bereich einer dem Vorratsbehälter zugewandten Oberkante des ersten Überlaufbehälters angelenkt und zwischen dem Schließzustand und dem Offenzustand verschwenkbar ist. Alternativ oder zusätzlich ist es vorgesehen, dass das zweite Schließmittel als Klappe ausgebildet ist, die im Bereich einer dem weiteren Vorratsbehälter zugewandten Oberkante des zweiten Überlaufbehälters angelenkt und zwischen dem Schließzustand und dem Offenzustand verschwenkbar ist. Dies ermöglicht es, überschüssiges Pulver in Abhängigkeit der Bewegungsrichtung des Transportmittels besonders zuverlässig im betreffenden Überlaufbehälter aufzufangen, da die Klappe in der Offenstellung als eine Art Einfüllschräge für das Pulver verwendet werden kann.

Weitere Vorteile ergeben sich, wenn der Vorratsbehälter und/oder der weitere Vorratsbehälter und/oder der erste Überlaufbehälter und/oder der zweite Überlaufbehälter eine bewegbare Bodenplatte umfasst. Hierdurch kann im Fall der Vorratsbehälter durch definiertes Anheben der Bodenplatte eine definierte Menge an Werkstoffpulver für einen weiteren Beschichtungsvorgang bereitgestellt werden. Alternativ oder zusätzlich kann durch Absenken der Bodenplatte im Fall der Überlaufbehälter ein vergrößerter Aufnahmeraum für überschüssiges Werkstoffpulver geschaffen werden.

Weiterhin hat es sich als vorteilhaft gezeigt, wenn der Bauraum eine bewegbare Plattform umfasst, welche zur Herstellung des Bauteils absenkbar ist. Dies vereinfacht eine schichtweise Herstellung des Bauteils, indem die Plattform nach jedem Beschichtungs- und Schmelz- bzw. Sinterdurchgang um einen definierten Betrag abgesenkt und mit neuem Werkstoffpulver beschichtet werden kann.

In einer weiteren vorteilhaften Ausgestaltung der Erfindung ist vorgesehen, dass der erste Überlaufbehälter und/oder der zweite Überlaufbehälter mit einer Rückführeinrichtung gekoppelt ist, mittels welcher Werkstoff zum Vorratsbehälter und/oder zum weiteren Vorratsbehälter rückführbar ist. Auf diese Weise kann das Bauteil mit besonders geringem Überschuss an Werkstoff hergestellt werden, da überschüssiger Werkstoff zurück zu dem betreffenden Vorratsbehälter transportiert und für einen weiteren Verfahrensdurchgang verwendet werden kann. Dabei kann ebenfalls vorgesehen sein, dass den beiden Überlaufbehältern ein gemeinsames Werkstoffreservoir zugeordnet ist, aus welchem die beiden Vorratsbehälter mit Werkstoff versorgt werden.

Indem die Vorrichtung als selektive Laserschmelzanlage ausgebildet ist, wird eine formlose Fertigung unterschiedlichster Bauteile ermöglicht. Beispielsweise können feinststrukturierte Bauteile wie etwa hohle Strukturbauteile einer Turbine oder eines Verdichters hergestellt werden. Weiterhin können Bauteile hergestellt werden, die gusstechnisch nicht mehr herstellbar sind, wie zum Beispiel Strukturbauteile von Triebwerken mit Gitterstrukturen zur Erhöhung der Strukturfestigkeit bei geringem Eigengewicht und zur deutlichen Erhöhung der inneren Oberflächen zur Verbesserung der Kühleffizienz. Zudem ist es möglich, Bohrungen zur Ausleitung der Kühlluft aus dem Triebwerksbauteil mittels des generativen Aufbauverfahrens direkt mit in die Struktur einzubauen. Durch das Aufheizen des Bauraums auf eine Temperatur knapp unterhalb des Schmelzpunkts des verwendeten Werkstoffs kann zudem die Kristallstruktur des entstehenden Bauteils beeinflusst und gesteuert werden. Der pulverförmige Werkstoff kann dabei aus Metall, einer Metall-Legierung, Keramik, Silikat oder einer Mischung davon bestehen. Die Vorrichtung kann insbesondere wenigstens einen CO₂- oder Nd:YAG-Laser aufweisen.

Ein zweiter Aspekt der Erfindung betrifft ein Verfahren zum Betreiben einer Vorrichtung gemäß dem ersten Erfindungsaspekt. Dabei ist erfindungsgemäß vorgesehen, dass das Transportmittel der Vorrichtung entweder vom Vorratsbehälter über den ersten Überlaufbehälter zum Bauraum und vom Bauraum über den zweiten Überlaufbehälter zum weiteren Vorratsbehälter oder vom weiteren Vorratsbehälter über den zweiten Überlaufbehälter zum Bauraum und vom Bauraum über den ersten Überlaufbehälter zum Vorratsbehälter bewegt wird, um pulverförmige Werkstoff zwischen dem Vorratsbehälter und dem weiteren Vorratsbehälter zu transportieren. Hierdurch wird erfindungsgemäß sichergestellt, dass das als Beschichter dienende Transportmittel im Unterschied zum Stand der Technik keinen unproduktiven Leerweg zurücklegt. Stattdessen wird der pulverförmige Werkstoff bzw. das pulverförmigen Werkstoffgemisch entweder in einer Richtung vom Vorratsbehälter zum Bauraum oder in der umgekehrten Richtung vom weiteren Vorratsbehälter zum Bauraum transportiert, wobei überschüssiger Werkstoff in den betreffenden Überlaufbehältern aufgefangen werden kann. Aufgrund dieser alternierenden Bewegung zwischen den beiden Vorratsbehältern muss das Transportmittel nicht wie bislang den kompletten Verfahrweg zurück in die Ausgangsposition fahren, um eine neue Pulverschicht zur Herstellung einer weiteren Bauteilschicht bereitzustellen, sondern kann bei jeder Bewegung zwischen einer dem Vorratsbehälter zugeordneten ersten Position und einer dem weiteren Vorratsbehälter zugeordneten zweiten Position Werkstoffpulver zum Bauraum transportieren. Dies verkürzt die Beschichtungsvorgänge entsprechend um etwa 50%, so dass die Produktivität und Wirtschaftlichkeit der Vorrichtung um bis zu 50% oder mehr gesteigert werden kann. Weiterhin werden das Transportmittel, das erste Schließmittel und das zweite Schließmittel erfindungsgemäß mit einem Steuermittel gekoppelt, wobei das Steuermittel das erste Schließmittel in den Schließzustand und das zweite Schließmittel in den Offenzustand schaltet, wenn das Transportmittel vom Vorratsbehälter über den ersten Überlaufbehälter zum Bauraum und vom Bauraum über den zweiten Überlaufbehälter zum weiteren Vorratsbehälter bewegt wird. Alternativ schaltet das Steuermittel das erste Schließmittel in den Offenzustand und das zweite Schließmittel in den Schließzustand, wenn das Transportmittel vom weiteren Vorratsbehälter über den zweiten Überlaufbehälter zum Bauraum und vom Bauraum über den ersten Überlaufbehälter zum Vorratsbehälter bewegt wird. Mit anderen Worten wird vorzugsweise zu Beginn jedes Verfahrwegs des Transportmittels der in Bewegungsrichtung vor dem Bauraum angeordnete Überlaufbehälter geschlossen, während der dem Bauraum nachgelagerte Überlaufbehälter geöffnet wird, um überschüssigen Werkstoff aufzunehmen, bevor dieser auf den gegenüberliegenden Vorratsbehälter transportiert wird.

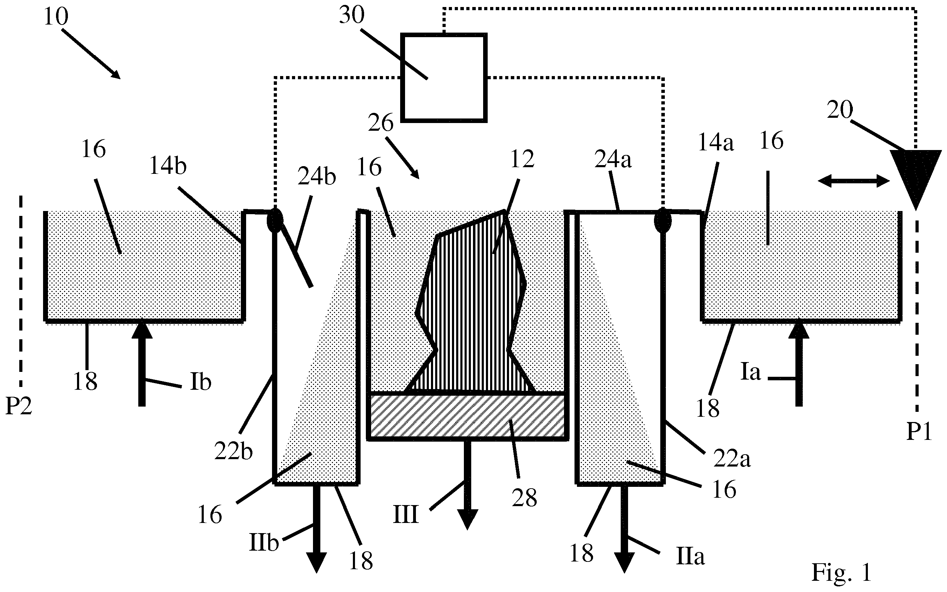

Weitere Merkmale der Erfindung ergeben sich aus den Ansprüchen, dem Ausführungsbeispiel sowie anhand der Zeichnung. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt Fig. 1 eine schematische Schnittansicht einer erfindungsgemäßen Vorrichtung zum generativen Herstellen eines Bauteils.

Fig. 1 zeigt in schematischer Schnittansicht ein Ausführungsbeispiel einer erfindungsgemäßen Vorrichtung 10 zum generativen Herstellen eines Bauteils 12. Die Vorrichtung 10, welche vorliegend als selektive Laserschmelzanlage ausgebildet ist, umfasst hierzu einen Vorratsbehälter 14a sowie einen weiteren Vorratsbehälter 14b zur Aufnahme von pulverförmigem Werkstoff 16. Jeder der Vorratsbehälter 14a, 14b umfasst im gezeigten Ausführungsbeispiel eine gemäß den Pfeilen Ia bzw. Ib bewegliche Bodenplatte 18, mit deren Hilfe die Menge an Werkstoff 16 einstellbar ist, die durch ein Transportmittel 20 der Vorrichtung 10 zwischen den beiden Grenzstellungen P1 und P2 transportiert werden kann. Weiterhin umfasst die Vorrichtung 10 einen ersten Überlaufbehälter 22a sowie einen zweiten Überlaufbehälter 22b, die jeweils zur Aufnahme von überschüssigem pulverförmigen Werkstoff 16 dienen. Jedem Überlaufbehälter 22a, 22b ist dabei ein vorliegend als Klappe ausgebildetes Schließmittel 24a bzw. 24b zugeordnet. Man erkennt, dass das Schließmittel 24a an einer dem Vorratsbehälter 14a zugewandten Seite des Überlaufbehälters 22a angelenkt ist, während das Schließmittel 24b an einer dem weiteren Vorratsbehälter 14b zugewandten Seite des Überlaufbehälters 22b angelenkt ist. Das Schließmittel 24a ist vorliegend in einem Schließzustand gezeigt, in welchem kein pulverförmiger Werkstoff 16 durch das Transportmittel 20 in den ersten Überlaufbehälter 22a transportierbar ist. Demgegenüber ist das Schließmittel 24b in einem Offenzustand gezeigt, in welchem pulverförmiger Werkstoff 16 in den zweiten Überlaufbehälter 22b transportierbar ist. Man erkennt, dass das Schließmittel 24b dabei eine Art Einfüllschräge bildet, durch die Werkstoff 16 in den Überlaufbehälter 22b gelenkt werden kann. Auch die Überlaufbehälter 22a, 22b umfassen jeweils eine bewegliche Bodenplatte 18, die gemäß Pfeil IIa bzw. IIb absenkbar ist, um einen größeren Aufnahmeraum für überschüssigen Werkstoff 16 zu schaffen und um zu verhindern, dass sich Werkstoff 16 oberhalb des betreffenden Überlaufbehälters 22a, 22b aufhäuft. Das Transportmittel 20, das erste Schließmittel 24a und das zweite Schließmittel 24b sind mit einem Steuermittel 30 gekoppelt, welches die Bewegungen der genannten Mittel 20, 24a, 24b steuert bzw. regelt.

Zwischen den Überlaufbehältern 22a, 22b befindet sich ein Bauraum 26, in welchem das Bauteil 12 in an sich bekannter Weise schichtweise aus dem pulverförmigen Werkstoff 16 herstellbar ist. Der Bauraum 26 weist eine bewegbare Plattform 28 auf, welche gemäß Pfeil III vor der Herstellung jeder Bauteilschicht um einen definierten Betrag abgesenkt und in der nachfolgend beschriebenen Weise mit neuem Werkstoffpulver 16 beschichtet wird.

Wenn das als Beschichter dienende Transportmittel 20 das Werkstoffpulver 16 vom Vorratsbehälter 14a zum Bauraum 26 Bauebene schieben soll, wird zunächst mit Hilfe des Steuermittels 30 die Klappe 24a geschlossen, während die Klappe 24b geöffnet wird. Das Transportmittel 20 wird dann von der Position P1 zur Position P2 bewegt, wodurch das Werkstoffpulver 16 über den geschlossenen Überlaufbehälter 22a zum Bauraum 26 bewegt wird. Überschüssiges Werkstoffpulver 16 wird dann in Richtung des weiteren Vorratsbehälters 14b weitertransportiert und fällt in den offenen Überlaufbehälter 22b. Das Transportmittel 20 wird dann bis zum Erreichen der Position P2 weiterbewegt, ohne dabei Werkstoff 16 zu transportieren. Nach dem Herstellen der betreffenden Bauteilschicht wird das Transportmittel 20 dann von der Position P2 zurück zur Position P1 bewegt. Hierzu wird die Klappe 24b geschlossen, während die Klappe 24b geöffnet wird. Das Transportmittel 20 bewegt damit den Werkstoff 16 vom Vorratsbehälter 14b über den geschlossenen Überlaufbehälter 22b zum Bauraum 26. Überschüssiger Werkstoff 16 wird dann weiter zum geöffneten Überlaufbehälter 22a transportiert und fällt in diesen, so dass das Transportmittel 20 den letzten Teil seines Verfahrweges zur Position P1 ohne Werkstoff 16 zurücklegt. Auf diese Weise muss der Beschichter 20 nur in einmal über die komplette Strecke fahren, um eine neue Werkstoffschicht für die Herstellung der betreffenden Bauteilschicht des Bauteils 12 aufzubringen. Die Dauer des Beschichtungsvorgangs wird damit um mehr als die Hälfte verkürzt. Das Aufschmelzen bzw. Sintern des Werkstoffs 16 kann grundsätzlich bereits initiiert werden kann, wenn das Transportmittel 20 sich außerhalb des Bauraums 26 befindet und noch nicht seine Endstellung P1 oder P2 erreicht hat.

### Bezugszeichenliste:

- 10: Vorrichtung

- 12: Bauteil
- 14a: Vorratsbehälter
- 14b: Vorratsbehälter
- 16: Werkstoff
- 18: Bodenplatte
- 20: Transportmittel
- 22a: Überlaufbehälter
- 22b: Überlaufbehälter
- 24a: Schließmittel
- 24b: Schließmittel
- 26: Bauraum
- 28: Plattform
- 30: Steuermittel

## Patentansprüche

1. Vorrichtung (10) zum generativen Herstellen eines Bauteils (12), umfassend:
- einen Vorratsbehälter (14a) zur Aufnahme von pulverförmige Werkstoff (16);
- einen ersten Überlaufbehälter (22a) zur Aufnahme von überschüssigem pulverförmigen Werkstoff (16), wobei dem ersten Überlaufbehälter (22a) ein erstes Schließmittel (24a) zugeordnet ist, welches zwischen einem Schließzustand, in welchem kein pulverförmiger Werkstoff (16) in den ersten Überlaufbehälter (22a) transportierbar ist, und einem Offenzustand, in welchem pulverförmiger Werkstoff (16) in den ersten Überlaufbehälter (22a) transportierbar ist, schaltbar ist,
- einen Bauraum (26), in welchem das Bauteil (12) schichtweise aus dem pulverförmige Werkstoff (16) herstellbar ist;
- einen zweiten Überlaufbehälter (22b) zur Aufnahme von überschüssigem pulverförmigen Werkstoff (16), wobei dem zweiten Überlaufbehälter (22b) ein zweites Schließmittel (24b) zugeordnet ist, welches zwischen einem Schließzustand, in welchem kein pulverförmiger Werkstoff (16) in den zweiten Überlaufbehälter (22b) transportierbar ist, und einem Offenzustand, in welchem pulverförmiger Werkstoff (16) in den zweiten Überlaufbehälter (22b) transportierbar ist, schaltbar ist; und
- ein Transportmittel (20), mittels welchem der pulverförmige Werkstoff (16) zumindest vom Vorratsbehälter (14a) über den ersten Überlaufbehälter (22a) zum Bauraum (26) und vom Bauraum (26) zum zweiten Überlaufbehälter (22b) transportierbar ist;
**dadurch gekennzeichnet, dass**
ein weiterer Vorratsbehälter (14b) zur Aufnahme von pulverförmigem Werkstoff (16) vorgesehen ist und dass das Transportmittel (20):
- vom Vorratsbehälter (14a) über den ersten Überlaufbehälter (22a) zum Bauraum (26a) und vom Bauraum (26) über den zweiten Überlaufbehälter (22b) zum weiteren Vorratsbehälter (14b); und
- vom weiteren Vorratsbehälter (14b) über den zweiten Überlaufbehälter (22b) zum Bauraum (26) und vom Bauraum (26) über den ersten Überlaufbehälter (22a) zum Vorratsbehälter (14a)
bewegbar ist, wobei das Transportmittel (20), das erste Schließmittel (24a) und das zweite Schließmittel (24b) mit einem Steuermittel (30) gekoppelt sind, wobei das Steuermittel (30) ausgelegt ist:
- das erste Schließmittel (24a) in den Schließzustand und das zweite Schließmittel (24b) in den Offenzustand zu schalten, wenn das Transportmittel (20) vom Vorratsbehälter (14a) über den ersten Überlaufbehälter (22a) zum Bauraum (26) und vom Bauraum (26) über den zweiten Überlaufbehälter (24b) zum weiteren Vorratsbehälter (14b) bewegt wird; und
- das erste Schließmittel (24a) in den Offenzustand und das zweite Schließmittel (24b) in den Schließzustand zu schalten, wenn das Transportmittel (20) vom weiteren Vorratsbehälter (14b) über den zweiten Überlaufbehälter (22b) zum Bauraum (26) und vom Bauraum (26) über den ersten Überlaufbehälter (22a) zum Vorratsbehälter (14a) bewegt wird.

2. Vorrichtung (10) nach Anspruch 1,
**dadurch gekennzeichnet, dass**
das erste Schließmittel (24a) und/oder das zweite Schließmittel (22b) als Klappe ausgebildet ist, welche zwischen dem Schließzustand und dem Offenzustand bewegbar ist.

3. Vorrichtung (10) nach Anspruch 2,
**dadurch gekennzeichnet, dass**
das erste Schließmittel (24a) als Klappe ausgebildet ist, die im Bereich einer dem Vorratsbehälter (14a) zugewandten Oberkante des ersten Überlaufbehälters (22a) angelenkt und zwischen dem Schließzustand und dem Offenzustand verschwenkbar ist und/oder dass das zweite Schließmittel (24b) als Klappe ausgebildet ist, die im Bereich einer dem weiteren Vorratsbehälter (14b) zugewandten Oberkante des zweiten Überlaufbehälters (22b) angelenkt und zwischen dem Schließzustand und dem Offenzustand verschwenkbar ist.

4. Vorrichtung (10) nach einem der Ansprüche 1 bis 3,
**dadurch gekennzeichnet, dass**
der Vorratsbehälter (14a) und/oder der weitere Vorratsbehälter (14b) und/oder der erste Überlaufbehälter (22a) und/oder der zweite Überlaufbehälter (22b) eine bewegbare Bodenplatte (18) umfasst.

5. Vorrichtung (10) nach einem der Ansprüche 1 bis 4,
**dadurch gekennzeichnet, dass**
der Bauraum (18) eine bewegbare Plattform (28) umfasst, welche zur Herstellung des Bauteils (12) absenkbar ist.

6. Vorrichtung (10) nach einem der Ansprüche 1 bis 5,
**dadurch gekennzeichnet, dass**
der erste Überlaufbehälter (22a) und/oder der zweite Überlaufbehälter (22b) mit einer Rückführeinrichtung gekoppelt ist, mittels welcher Werkstoff (16) zum Vorratsbehälter (14a) und/oder zum weiteren Vorratsbehälter (14b) rückführbar ist.

7. Vorrichtung (10) nach einem der Ansprüche 1 bis 6,
**dadurch gekennzeichnet, dass**
diese als selektive Laserschmelzanlage ausgebildet ist.

8. Verfahren zum Betreiben einer Vorrichtung (10) nach einem der Ansprüche 1 bis 7, bei welchem das Transportmittel (20):
- entweder vom Vorratsbehälter (14a) über den ersten Überlaufbehälter (22a) zum Bauraum (26) und vom Bauraum (26) über den zweiten Überlaufbehälter (22b) zum weiteren Vorratsbehälter (14b); oder
- vom weiteren Vorratsbehälter (14b) über den zweiten Überlaufbehälter (22b) zum Bauraum (26) und vom Bauraum (26) über den ersten Überlaufbehälter (22a) zum Vorratsbehälter (14a)
bewegt wird, um pulverförmige Werkstoff (16) zwischen dem Vorratsbehälter (14a) und dem weiteren Vorratsbehälter (14b) zu transportieren, wobei das Transportmittel (20), das erste Schließmittel (24a) und das zweite Schließmittel (24b) mit einem Steuermittel (30) gekoppelt sind, wobei das Steuermittel (30):
- das erste Schließmittel (24a) in den Schließzustand und das zweite Schließmittel (24b) in den Offenzustand schaltet, wenn das Transportmittel (20) vom Vorratsbehälter (14a) über den ersten Überlaufbehälter (22a) zum Bauraum (26) und vom Bauraum (26) über den zweiten Überlaufbehälter (22b) zum weiteren Vorratsbehälter (14b) bewegt wird; oder
- das erste Schließmittel (24a) in den Offenzustand und das zweite Schließmittel (24b) in den Schließzustand schaltet, wenn das Transportmittel (20) vom weiteren Vorratsbehälter (14b) über den zweiten Überlaufbehälter (22b) zum Bauraum (26) und vom Bauraum (26) über den ersten Überlaufbehälter (22a) zum Vorratsbehälter (14a) bewegt wird.

## Claims

1. A device (10) for the generative production of a component (12), comprising:
- a supply tank (14a) for accommodating powder-form material (16);
- a first overflow tank (22a) for accommodating excess powder-form material (16), a first closing means (24a) being associated with the first overflow tank (22a), the first closing means being switchable between a closed state in which powder-form material (16) is not transportable into the first overflow tank (22a), and an open state in which powder-form material (16) is transportable into the first overflow tank (22a),
- a construction space (26) in which the component (12) is producible layer-by layer from the powder-form material (16);
- a second overflow tank (22b) for accommodating excess powder-form material (16), a second closing means (24b) being associated with the second overflow tank (22b), the second closing means being switchable between a closed state in which powder-form material (16) is not transportable into the second overflow tank (22b), and an open state in which powder-form material (16) is transportable into the second overflow tank (22b); and
- a transport means (20) by means of which the powder-form material (16) is transportable at least from the supply tank (14a), across the first overflow tank (22a), to the construction space (26), and from the construction space (26) to the second overflow tank (22b);
**characterized in that**
an additional supply tank (14b) for accommodating powder-form material (16) is provided, and the transport means (20):
- is movable from the supply tank (14a), across the first overflow tank (22a), to the construction space (26a) and from the construction space (26), across the second overflow tank (22b), to the additional supply tank (14b); and
- is movable from the additional supply tank (14b), across the second overflow tank (22b), to the construction space (26) and from the construction space (26), across the first overflow tank (22a), to the supply tank (14a),
wherein the transport means (20), the first closing means (24a), and the second closing means (24b) are coupled to a control means (30), the control means (30) being designed for:
- switching the first closing means (24a) into the closed state and the second closing means (24b) into the open state when the transport means (20) is moved from the supply tank (14a), across the first overflow tank (22a), to the construction space (26) and from the construction space (26), across the second overflow tank (24b), to the additional supply tank (14b); and
- switching the first closing means (24a) into the open state and the second closing means (24b) into the closed state when the transport means (20) is moved from the additional supply tank (14b), across the second overflow tank (22b), to the construction space (26) and from the construction space (26), across the first overflow tank (22a), to the supply tank (14a).

2. The device (10) according to Claim 1,
**characterized in that**
the first closing means (24a) and/or the second closing means (22b) are/is designed as a flap that is movable between the closed state and the open state.

3. The device (10) according to Claim 2,
**characterized in that**
the first closing means (24a) is designed as a flap that is articulated in the area of an upper edge of the first overflow tank (22a) facing the supply tank (14a) and is pivotable between the closed state and the open state, and/or the second closing means (24b) is designed as a flap that is articulated in the area of an upper edge of the second overflow tank (22b) facing the additional supply tank (14b) and is pivotable between the closed state and the open state.

4. The device (10) according to one of Claims 1 to 3,
**characterized in that**
the supply tank (14a) and/or the additional supply tank (14b) and/or the first overflow tank (22a) and/or the second overflow tank (22b) include(s) a movable bottom plate (18).

5. The device (10) according to one of Claims 1 to 4,
**characterized in that**
the construction space (18) includes a movable platform (28) that is lowerable for producing the component (12).

6. The device (10) according to one of Claims 1 to 5,
**characterized in that**
the first overflow tank (22a) and/or the second overflow tank (22b) are/is coupled to a return device by means of which material (16) is returnable to the supply tank (14a) and/or to the additional supply tank (14b).

7. The device (10) according to one of Claims 1 to 6,
**characterized in that**
the device is designed as a selective laser melting unit.

8. A method for operating a device (10) according to one of Claims 1 to 7, in which the transport means (20):
- is either moved from the supply tank (14a), across the first overflow tank (22a), to the construction space (26) and from the construction space (26), across the second overflow tank (22b), to the additional supply tank (14b); or
- is moved from the additional supply tank (14b), across the second overflow tank (22b), to the construction space (26) and from the construction space (26), across the first overflow tank (22a), to the supply tank (14a)
in order to transport powder-form material (16) between the supply tank (14a) and the additional supply tank (14b), wherein the transport means (20), the first closing means (24a), and the second closing means (24b) are coupled to a control means (30), the control means (30):
- switching the first closing means (24a) into the closed state and the second closing means (24b) into the open state when the transport means (20) is moved from the supply tank (14a), across the first overflow tank (22a), to the construction space (26) and from the construction space (26), across the second overflow tank (22b), to the additional supply tank (14b); or
- switching the first closing means (24a) into the open state and the second closing means (24b) into the closed state when the transport means (20) is moved from the additional supply tank (14b), across the second overflow tank (22b), to the construction space (26) and from the construction space (26), across the first overflow tank (22a), to the supply tank (14a).

## Revendications

1. Dispositif (10) de fabrication générative d'un composant (12), comprenant :
- un récipient d'alimentation (14a) pour recevoir une matériau pulvérulent (16) ;
- un premier récipient de trop-plein (22a) pour recevoir du matériau pulvérulent de trop-plein (16), dans lequel il est affecté au premier récipient de trop-plein (22a) un premier moyen de fermeture (24a), qui peut passer entre un état de fermeture, dans lequel aucun matériau pulvérulent (16) ne peut être transporté dans le premier récipient de trop-plein (22a), et un état d'ouverture, dans lequel du matériau pulvérulent (16) peut être transporté dans le récipient de trop-plein (22a),
- un espace de fabrication (26), dans lequel le composant (12) peut être fabriqué en couches à partir du matériau pulvérulent (16) ;
- un second récipient de trop-plein (22b) pour recevoir du matériau pulvérulent de trop-plein (16), dans lequel il est affecté au second récipient de trop-plein (22b) un second moyen de fermeture (24b), qui peut passer entre une état de fermeture, dans lequel aucun matériau pulvérulent (16) ne peut être transporté dans le second récipient de trop-plein (22b) et un état d'ouverture, dans lequel du matériau pulvérulent (16) peut être transporté dans le second récipient de trop-plein (22b) ;
- un moyen de transport (20), au moyen duquel le matériau pulvérulent (16) peut être transporté au moins du récipient d'alimentation (14a) à l'espace de construction (26) via le premier récipient de trop-plein (22a) et de l'espace de construction (26) au second récipient de trop-plein (22b) ;
**caractérisé en ce que** :
une autre récipient d'alimentation (14b) est prévu pour recevoir du matériau pulvérulent (16) et le moyen de transport (20) peut être déplacé:
- du récipient d'alimentation (14a) à l'espace de construction (26a) via le premier récipient de trop-plein (22a) et de l'espace de construction (26) à l'autre récipient d'alimentation (14b) via le second récipient de trop-plein (22b) ; et
- de l'autre récipient d'alimentation (14b) à l'espace de construction (26) via le second récipient de trop-plein (22b) et de l'espace de construction (26) au récipient d'alimentation (14a) via le premier récipient de trop-plein (22a),
dans lequel le moyen de transport (20), le premier moyen de fermeture (24a) et le second moyen de fermeture (24b) sont couplés à un moyen de commande (30), dans lequel le moyen de commande (30) est conçu en sorte de :
- faire passer le premier moyen de fermeture (24a) à l'état de fermeture et le second moyen de fermeture (24b) à l'état d'ouverture lorsque le moyen de transport (20) est déplacé du récipient d'alimentation (14a) à l'espace de construction (26) via le premier récipient de trop-plein (22a) et de l'espace de construction (26) à l'autre récipient d'alimentation (14b) via le second récipient de trop-plein (24b) ; et
- faire passer le premier moyen de fermeture (24a) à l'état d'ouverture et le second moyen de fermeture (24b) à l'état de fermeture lorsque le moyen de transport (20) est déplacé de l'autre récipient d'alimentation (14b) à l'espace de construction (26) via le second récipient de trop-plein (22b) et de l'espace de construction (26) au récipient d'alimentation (14a) via le premier récipient de trop-plein (22a).

2. Dispositif (10) selon la revendication 1,
**caractérisé en ce que :**
le premier moyen de fermeture (24a) et/ou le second moyen de fermeture (22b) est ou sont conformés en clapet, qui peut être déplacé entre l'état de fermeture et l'état d'ouverture.

3. Dispositif (10) selon la revendication 2,
**caractérisé en ce que :**
le premier moyen de fermeture (24a) est conçu sous la forme d'un clapet qui est articulé dans la zone d'une arête supérieure - tournée vers le récipient d'alimentation (14a) - du premier récipient de trop-plein (22a) et peut pivoter entre l'état de fermeture et l'état d'ouverture et/ou le second moyen de fermeture (24b) est conçu sous la forme d'un clapet qui est articulé dans la zone d'une arête supérieure - tournée vers l'autre dispositif d'alimentation (14b) - du second récipient de trop-plein (22b) et peut pivoter entre l'état de fermeture et l'état d'ouverture.

4. Dispositif (10) selon l'une quelconque des revendications 1 à 3,
**caractérisé en ce que :**
le récipient d'alimentation (14a) et/ou l'autre récipient d'alimentation (14b) et/ou le premier récipient de trop-plein (22a) et/ou le second récipient de trop-plein (22b) comprend ou comprennent une plaque de base mobile (18).

5. Dispositif (10) selon l'une quelconque des revendications 1 à 4,
**caractérisé en ce que :**
l'espace de construction (18) comprend une plateforme mobile (28) qui peut être abaissée pour fabriquer le composant (12).

6. Dispositif (10) selon l'une quelconque des revendications 1 à 5,
**caractérisé en ce que :**
le premier récipient de trop-plein (22a) et/ou le second récipient de trop-plein (22b) est ou sont couplés à un dispositif de retour à l'aide duquel le matériau (16) peut être retourné au récipient d'alimentation (14a) et/ou à l'autre récipient d'alimentation (14b).

7. Dispositif (10) selon l'une quelconque des revendications 1 à 6,
**caractérisé en ce que :**
celui-ci est conçu sous la forme d'une installation de fusion au laser sélective.

8. Procédé de fonctionnement d'un dispositif (10) selon l'une quelconque des revendications 1 à 7, dans lequel le moyen de transport (20) est déplacé :
- du récipient d'alimentation (14a) à l'espace de construction (26) via le premier récipient de trop-plein (22a) et de l'espace de construction (26) à l'autre récipient d'alimentation (14b) via le second récipient de trop-plein (22b) ; ou
- de l'autre récipient d'alimentation (14b) à l'espace de construction (26) via le second récipient de trop-plein (22b) et de l'espace de construction (26) au récipient d'alimentation (14a) via le premier récipient de trop-plein (22a),
pour transporter du matériau pulvérulent (16) entre le récipient d'alimentation (14a) et l'autre récipient d'alimentation (14b), dans lequel le moyen de transport (20), le premier moyen de fermeture (24a) et le second moyen de fermeture (24b) sont couplés à un moyen de commande (30), dans lequel le moyen de commande (30) :
- fait passer le premier moyen de fermeture (24a) à l'état de fermeture et le second moyen de fermeture (24b) à l'état d'ouverture lorsque le moyen de transport (20) est déplacé du récipient d'alimentation (14a) à l'espace de construction (26) via le premier récipient de trop-plein (22a) et de l'espace de construction (26) à l'autre récipient d'alimentation (14b) via le second récipient de trop-plein (22b) ; ou
- fait passer le premier moyen de fermeture (24a) à l'état d'ouverture et le second moyen de fermeture (24b) à l'état de fermeture lorsque le moyen de transport (20) est déplacé de l'autre récipient d'alimentation (14b) à l'espace de construction (26) via le second récipient de trop-plein (22b) et de l'espace de construction (26) au récipient d'alimentation (14a) via le premier récipient de trop-plein (22a).
